# EUROPEAN PATENT APPLICATION

(11) **EP 3 816 538 A1**
(43) Date of publication of application: **05.05.2021**
(21) Application number: 20204120.8
(22) Date of filing: 27.10.2020
(51) Int. Cl.: F25B 13/00, F25B 31/00, F25B 49/02

(54) **AIR CONDITIONING DEVICE**

(30) Priority: 01.11.2019 JP 2019199529
(71) Applicant: Panasonic Intellectual Property Management Co., Ltd., Osaka-shi, Osaka 540-6207 (JP)
(72) Inventor: SEKINE, Takashi, Osaka, 540-6207 (JP); SHIGETA, Akihiro, Osaka, 540-6207 (JP)
(74) Representative: Eisenführ Speiser

(57) **Abstract**

An air conditioning device capable of performing efficient air conditioning at a high COP in accordance with a cooling-heating load when air conditioning as a chiller is performed is provided. The air conditioning device includes a control unit (60) configured to perform drive control of a plurality of compressors (11), and the control unit (60) calculates drive frequencies of n compressors among the plurality of compressors (11) in accordance with a cooling-heating load, calculates a COP for the calculated drive frequencies, determines the number of compressors (11) with which the COP is maximum, and performs drive control involving the determined number of compressors (11).

## Description

### BACKGROUND OF THE INVENTION

### Field of the Invention

The present invention relates to an air conditioning device, and particularly relates to an air conditioning device capable of performing control involving the number of compressors with which a COP is maximum in accordance with a cooling-heating load as a chiller.

### Description of the Related Art

A typically known air conditioning device includes an outdoor unit and an indoor unit and configured to perform air conditioning by transferring, to an indoor unit, a refrigerant transferred from a compressor of an outdoor unit.

In a disclosed technology (refer to Japanese Patent Laid-open No. 09-113041, for example) of such an air conditioning device, for example, an oil returning pipe 23 extended from an oil separator 16 is connected with a suction pipe 21a of a capacity-variable compressor 14 and an overflow pipe 28 for lubricant from the capacity-variable compressor 14 is connected with a suction pipe 21b of a capacity-constant compressor 15 so that the lubricant is smoothly returned to the compressors 14 and 15.

### SUMMARY OF THE INVENTION

However, in the conventional technology, since oil is returned to the plurality of compressors from the oil separator, oil overflowing from each compressor is returned to the other compressor.

Thus, oil balance is potentially lost depending on an operation load on the compressors.

Recently, an air conditioning device called a chiller, which is configured to perform heat exchange between a refrigerant and water through and perform air conditioning by using the water subjected to the heat exchange, has been used. In this case, when air conditioning control is performed by using a plurality of compressors, it is extremely important to efficiently perform the air conditioning control.

The present invention is intended to solve the above-described problem and provide an air conditioning device capable of efficiently performing air conditioning at a high COP in accordance with a cooling-heating load and excellently maintaining oil balance when air conditioning as a chiller is performed.

To achieve the above-described intention, an air conditioning device of the present invention includes: an outdoor unit including a plurality of compressors; a refrigerant-water heat exchanger configured to perform heat exchange between a refrigerant transferred from the outdoor unit and water; and a control unit configured to perform drive control of the plurality of compressors, and the control unit calculates drive frequencies of n compressors among the plurality of compressors in accordance with a cooling-heating load, calculates a COP for the calculated drive frequencies, determines the number of compressors with which the COP is maximum, and performs drive control involving the determined number of compressors.

Accordingly, since the COP for the calculated drive frequencies is calculated in accordance with the cooling-heating load, the number of compressors with which the COP is maximum is determined, and drive control involving the determined number of compressors is performed, it is possible to perform control involving the number of compressors with which the COP is maximum in accordance with a cooling-heating load as a chiller, thereby performing air conditioning at an increased COP.

According to the present invention, it is possible to perform control involving the number of compressors with which the COP is maximum in accordance with a cooling-heating load as a chiller, thereby efficiently performing air conditioning at an increased COP.

### BRIEF DESCRIPTION OF THE DRAWINGS

FIG. 1 is a schematic configuration diagram illustrating an embodiment of an outdoor unit of an air conditioning device according to the present invention;
FIG. 2 is a schematic configuration diagram illustrating an oil-pipe connection configuration of a compressor 1 according to the present embodiment;
FIG. 3 is a block diagram illustrating a control configuration according to the present embodiment;
FIG. 4 is a graph illustrating exemplary compressor characteristic lines based on a high-pressure-side refrigerant temperature and a low-pressure-side refrigerant temperature;
FIG. 5 is a diagram illustrating exemplary drive frequency allocation when a drive frequency necessary for compressor operation is 90 Hz;
FIG. 6 is a graph illustrating a COP calculation result when the drive frequency necessary for compressor operation is 90 Hz;
FIG. 7 is a diagram illustrating exemplary drive frequency allocation when the drive frequency necessary for compressor operation is 120 Hz;
FIG. 8 is a graph illustrating a COP calculation result when the drive frequency necessary for compressor operation is 120 Hz;
FIG. 9 is a diagram illustrating exemplary drive frequency allocation when the drive frequency necessary for compressor operation is 150 Hz;
FIG. 10 is a graph illustrating a COP calculation result when the drive frequency necessary for compressor operation is 150 Hz; and
FIG. 11 is a flowchart illustrating operation according to the present embodiment.

### DETAILED DESCRIPTION OF THE PREFERRED EMBODIMENT

According to a first invention, in an air conditioning device including an outdoor unit including a plurality of compressors, a refrigerant-water heat exchanger configured to perform heat exchange between a refrigerant transferred from the outdoor unit and water, and a control unit configured to perform drive control of the plurality of compressors, the control unit calculates a drive frequencies of n compressors among the plurality of compressors in accordance with a cooling-heating load, calculates a COP for the calculated drive frequencies, determines the number of compressors with which the COP is maximum, and performs drive control involving the determined number of compressors.

Accordingly, it is possible to perform control involving the number of compressors with which the COP is maximum in accordance with a cooling-heating load as a chiller, thereby performing air conditioning at an increased COP.

According to a second invention, the control unit acquires a high-pressure-side refrigerant temperature and a low-pressure-side refrigerant temperature of each compressor, selects a characteristic line of the compressor based on the high-pressure-side refrigerant temperature and the low-pressure-side refrigerant temperature, and calculates the COP at the drive frequencies of the compressors based on the characteristic line.

Accordingly, it is possible to calculate the COP in accordance with characteristics of each compressor based on the characteristic line.

According to a third invention, the outdoor unit includes bifurcation pipes bifurcating to the plurality of compressors from a refrigerant pipe through which the refrigerant is returned to the compressors, and includes an oil separator, and an oil pipe through which oil is returned from the oil separator is connected with the bifurcation pipe of the compressor having a highest activation priority.

Accordingly, it is possible to efficiently supply oil to a compressor having a high activation priority.

An embodiment of the present invention will be described below with reference to the accompanying drawings.

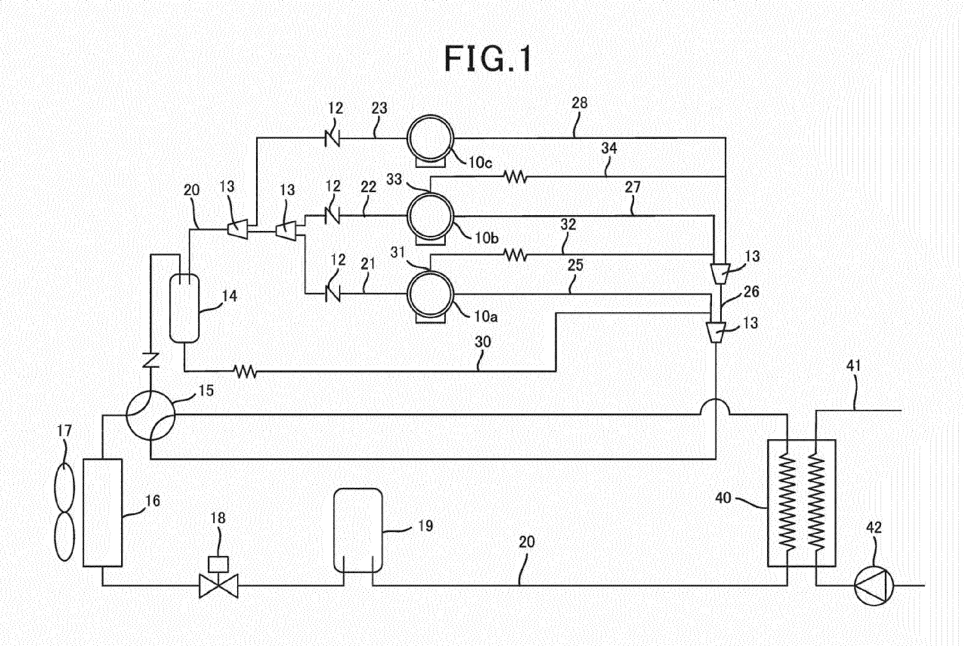

FIG. 1 is a schematic configuration diagram illustrating an outdoor unit of an air conditioning device according to an embodiment of the present invention.

As illustrated in FIG. 1, the air conditioning device includes an outdoor unit 10. The outdoor unit 10 includes a first compressor 11a, a second compressor 11b, and a third compressor 11c. In the following description, the first compressor 11a, the second compressor 11b, and the third compressor 11c are referred to as compressors 11 when not needed to be distinguished from one another.

Each compressor 11 is a capacity-variable compressor 11 configured to be inverter-driven at a variable drive frequency.

Although an example in which three compressors 11 are provided will be described in the present embodiment, the present invention is not limited thereto, and two compressors 11 or four compressors 11 or more may be provided.

A check valve 12 is disposed on a discharging side of each of the first compressor 11a, the second compressor 11b, and the third compressor 11c, and a first refrigerant pipe 21 on the discharging side of the first compressor 11a and a second refrigerant pipe 22 on the discharging side of the second compressor 11b are joined to one refrigerant pipe 20 through a three-way joint 13.

The refrigerant pipe 20 is joined to a third refrigerant pipe 23 on the discharging side of the third compressor 11c through a three-way joint 13.

The joined refrigerant pipe 20 is connected with an oil separator 14, and the oil separator 14 is connected with an outdoor heat exchanger 16 through a four-way valve 15.

An outdoor fan 17 for heat exchange between a refrigerant flowing through the outdoor heat exchanger 16 and external air is provided near the outdoor heat exchanger 16.

The outdoor heat exchanger 16 is connected with a receiver tank 19 through an expansion valve 18.

The receiver tank 19 is connected with a water-refrigerant heat exchanger 40, and the refrigerant pipe 20 of the water-refrigerant heat exchanger 40 is connected with the four-way valve 15.

The refrigerant pipe 20 connected with the four-way valve 15 is bifurcated through a three-way joint 13, and one first bifurcation pipe 25 is connected with the first compressor 11a on a suction side.

The other second bifurcation pipe 26 is further bifurcated through a three-way joint 13, and one third bifurcation pipe 27 is connected with the second compressor 11b on the suction side. The other fourth bifurcation pipe 28 is connected with the third compressor 11c on the suction side.

A bottom part of the oil separator 14 is connected with an oil pipe 30, and the oil pipe 30 is connected with a halfway part of the first bifurcation pipe 25 bifurcated through the three-way joint 13.

One end part of a first oil returning pipe 32 is connected with a control port 31 of the first compressor 11a, and the other end part of the first oil returning pipe 32 is connected with a halfway part of the second bifurcation pipe 26.

One end part of a second oil returning pipe 34 is connected with a control port 33 of the second compressor 11b, and the other end part of the second oil returning pipe 34 is connected with a halfway part of the third bifurcation pipe 27.

A water pipe 41 is connected with the water-refrigerant heat exchanger 40 so that heat exchange between the refrigerant transferred through the refrigerant pipe 20 and water transferred through the water pipe 41 is performed by the water-refrigerant heat exchanger 40.

A pump 42 is provided at a halfway part of the water pipe 41 so that the water is circulated through the water pipe 41 by drive of the pump 42.

The water pipe 41 is connected with a predetermined indoor unit, although not illustrated, so that indoor air conditioning is performed by the indoor unit.

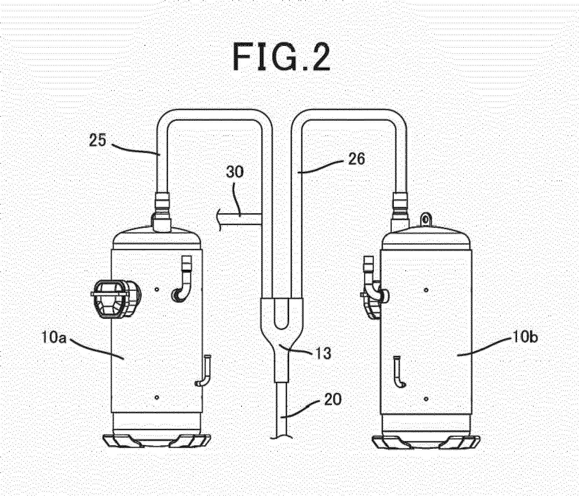

FIG. 2 is a schematic configuration diagram illustrating a connection configuration of the oil pipe 30 of the compressor 11.

As illustrated in FIG. 2, the refrigerant pipe 20 connected with the four-way valve 15 is connected with the three-way joint 13 from below, and the first bifurcation pipe 25 and the second bifurcation pipe 26 connected with the first compressor 11a and the second compressor 11b, respectively, are connected with the three-way joint 13 from above.

The oil pipe 30 is connected at a halfway part of the first bifurcation pipe 25, in other words, above the three-way joint 13. Accordingly, oil from the oil separator 14 is returned to the first bifurcation pipe 25 through the oil pipe 30.

In the present embodiment, when the first compressor 11a has stopped for some reason, oil inside the first compressor 11a falls below the three-way joint 13 through the first bifurcation pipe 25 by the gravitational force. The falling oil is returned to the second compressor 11b by drive of the second compressor 11b together with the refrigerant sucked by the second compressor 11b.

A low-pressure-side refrigerant temperature sensor 50 and a high-pressure-side refrigerant temperature sensor 51 are provided on the refrigerant suction side and discharging side, respectively, of each compressor 11.

Although a suction temperature and a discharge temperature of the refrigerant are detected in the present embodiment, for example, a suction pressure and a discharge pressure of the refrigerant may be detected.

Subsequently, a control configuration of the present embodiment will be described below.

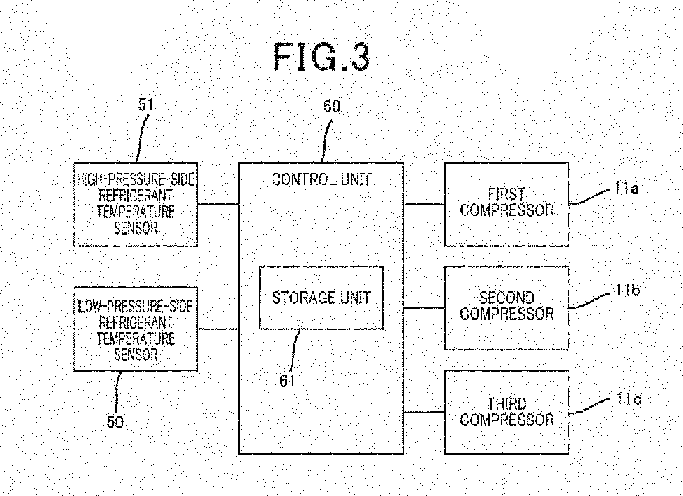

FIG. 3 is a block diagram illustrating the control configuration of the present embodiment.

As illustrated in FIG. 3, the air conditioning device includes a control unit 60. The control unit 60 is achieved by, for example, a CPU and includes a storage unit 61.

The control unit 60 performs drive control of the first compressor 11a, the second compressor 11b, and the third compressor 11c. The control unit 60 controls drive frequencies of the first compressor 11a, the second compressor 11b, and the third compressor 11c based on detected values of the low-pressure-side refrigerant temperature sensor 50 and the high-pressure-side refrigerant temperature sensor 51.

In the present embodiment, the first compressor 11a is a compressor 11 having a highest activation priority. In other words, the first compressor 11a is set as a compressor 11 constantly driven at a highest drive frequency among those of the second compressor 11b and the third compressor 11c.

Subsequently, control of the drive frequency of each compressor 11 will be described below.

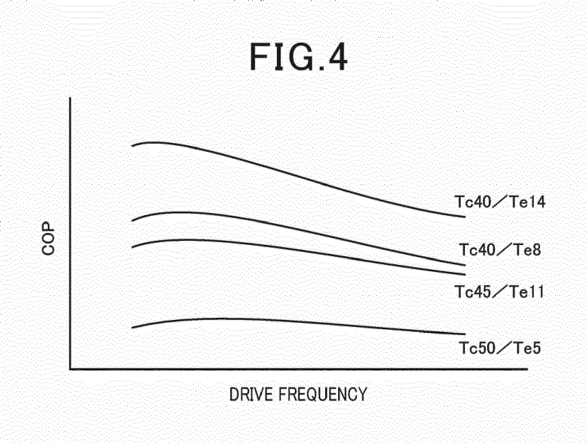

FIG. 4 is a graph illustrating exemplary characteristic lines of the compressor 11 based on a high-pressure-side refrigerant temperature and a low-pressure-side refrigerant temperature.

Each characteristic line of the compressor 11 is produced in advance based on the high-pressure-side refrigerant temperature and the low-pressure-side refrigerant temperature as illustrated in, for example, FIG. 4, and stored in the storage unit 61 as a data table. In FIG. 4, the vertical axis represents the COP, and the horizontal axis represents the drive frequency of the compressor 11. The characteristic line is determined based on difference between the high-pressure-side refrigerant temperature and the low-pressure-side refrigerant temperature.

FIG. 4 illustrates characteristic lines when the high-pressure-side refrigerant temperature Tc/the low-pressure-side refrigerant temperature Tc is 40/14, 40/8, 45/11, and 50/5 from the top.

When operation of the compressors 11 is started, the control unit 60 acquires discharging-side refrigerant temperatures and suction-side refrigerant temperatures of all compressors 11 through the low-pressure-side refrigerant temperature sensor 50 and the high-pressure-side refrigerant temperature sensor 51, and selects the characteristic line of the compressor 11 stored in the data table based on the temperatures. This characteristic line selection processing is performed for all driven compressors 11.

Then, the control unit 60 sets the drive frequency of each compressor 11 for achieving a capacity necessary for cooling-heating operation with n compressors 11, and calculates the COP when the compressors 11 are operated at the set drive frequencies.

Subsequently, the control unit 60 reduces the number of compressors 11 by one and repeats the same processing.

Then, the control unit 60 determines the number of compressors 11 with which the COP is maximum and the drive frequencies thereof, and performs drive control of the compressors 11.

This control of the drive frequencies of the compressors 11 will be more specifically described below.

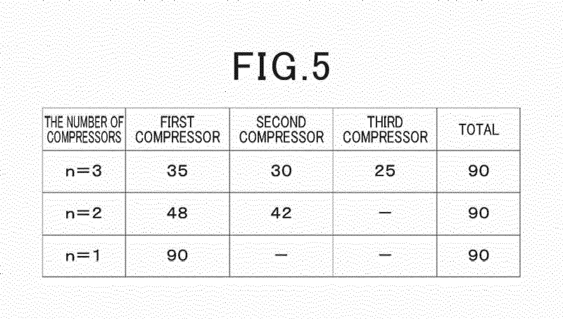

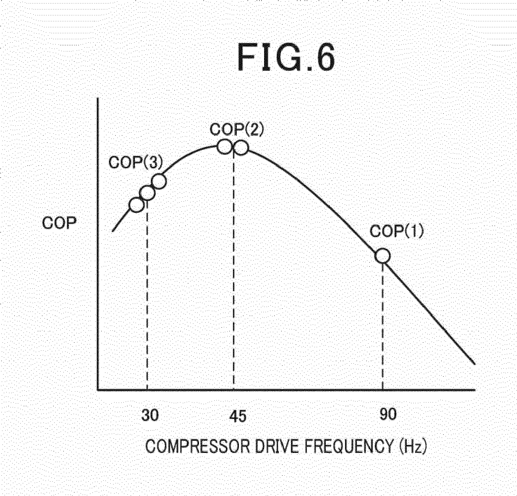

FIG. 5 is a diagram illustrating exemplary drive frequency allocation when a drive frequency necessary for operation of the compressors 11 is 90 Hz. FIG. 6 is a graph illustrating a COP calculation result when the drive frequency necessary for operation of the compressors 11 is 90 Hz.

As illustrated in FIGS. 5 and 6, for example, the drive frequency necessary for operation of the compressors 11 is set to be 90 Hz based on a cooling-heating load. The present embodiment describes an example in which each compressor 11 has a maximum drive frequency of 120 Hz approximately.

The control unit 60 selects the characteristic line of the compressor 11 stored in the data table based on the high-pressure-side refrigerant temperature and the low-pressure-side refrigerant temperature of the compressor 11.

When the necessary drive frequency of 90 Hz is allocated to the three compressors 11, for example, the drive frequency of the first compressor 11a is set to be 35 Hz, the drive frequency of the second compressor 11b is set to be 30 Hz, and the drive frequency of the third compressor 11c is set to be 25 Hz.

In the present embodiment, since such a condition is applied that the drive frequency of the first compressor 11a is constantly set to be a highest value, the drive frequency of the first compressor 11a is highest, and the drive frequencies of the second compressor 11b and the third compressor 11c are each set to be a value that is offset by, for example, 5 Hz. Difference between the drive frequencies of the compressors 11 is not limited to 5 Hz but may be optionally set.

This is because resonance potentially occurs when the drive frequencies of all compressors 11 are set to be identical. In addition, the difference among the drive frequencies is provided with oil balance taken into consideration.

Subsequently, the control unit 60 calculates the COP with the three compressors 11 based on the set drive frequencies.

Similarly, when the control unit 60 reduces the number of compressors 11 and allocates the necessary drive frequency of 90 Hz to two of the compressors 11, for example, the drive frequency of the first compressor 11a is set to be 48 Hz and the drive frequency of the second compressor 11b is set to be 42 Hz.

Then, the control unit 60 calculates the COP with the two compressors 11.

Similarly, when the control unit 60 reduces the number of compressors 11 and allocates the necessary drive frequency of 90 Hz to one of the compressors 11, the drive frequency of the first compressor 11a is set to be 90 Hz.

Then, the control unit 60 calculates the COP with the one compressor 11.

These COP results calculated when the number of compressors 11 is three, two, and one are illustrated in FIG. 6.

From this, it can be understood that the COP is maximum when the two compressors 11 are driven.

Thus, the control unit 60 selects drive control involving the two compressors 11.

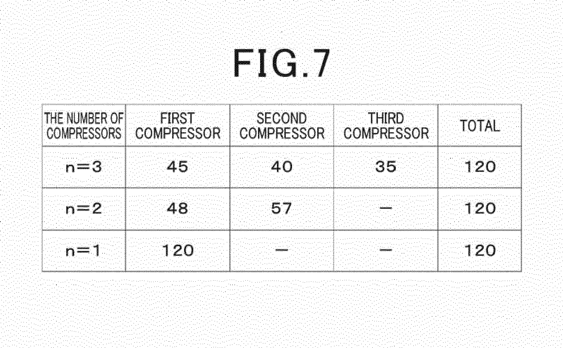

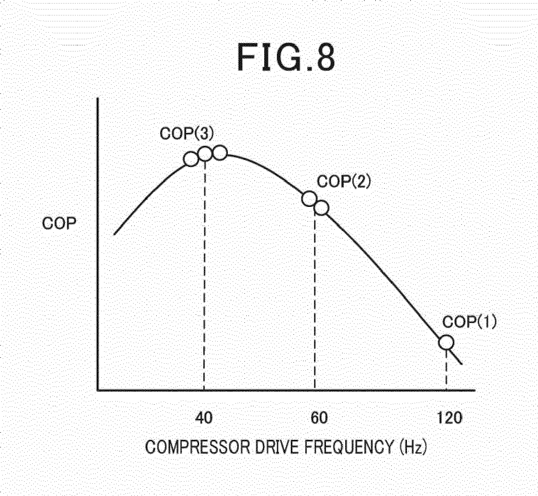

FIG. 7 is a diagram illustrating exemplary drive frequency allocation when the drive frequency necessary for operation of the compressors 11 is 120 Hz. FIG. 8 is a graph illustrating a COP calculation result when the drive frequency necessary for operation of the compressors 11 is 120 Hz.

As illustrated in FIGS. 7 and 8, when the drive frequency necessary for operation of the compressors 11 is set to be 120 Hz based on the cooling-heating load, the control unit 60 selects the characteristic line of the compressor 11 stored in the data table based on the high-pressure-side refrigerant temperature and the low-pressure-side refrigerant temperature of each compressor 11.

When the necessary drive frequency of 120 Hz is allocated to the three compressors 11, for example, the drive frequency of the first compressor 11a is set to be 45 Hz, the drive frequency of the second compressor 11b is set to be 40 Hz, and the drive frequency of the third compressor 11c is set to be 35 Hz.

Subsequently, the control unit 60 calculates the COP with the three compressors 11 based on the set drive frequencies.

Similarly, when the control unit 60 reduces the number of compressors 11 and allocates the necessary drive frequency of 120 Hz to two of the compressors 11, for example, the drive frequency of the first compressor 11a is set to be 63 Hz and the drive frequency of the second compressor 11b is set to be 57 Hz.

Then, the control unit 60 calculates the COP with the two compressors 11.

Similarly, when the control unit 60 reduces the number of compressors 11 and allocates the necessary drive frequency of 120 Hz to one of the compressors 11, the drive frequency of the first compressor 11a is set to be 120 Hz.

Then, the control unit 60 calculates the COP with the one compressor 11.

These COP results calculated when the number of compressors 11 is three, two, and one are illustrated in FIG. 8.

From this, it can be understood that the COP is maximum when the three compressors 11 are driven.

Thus, the control unit 60 selects drive control involving the three compressors 11.

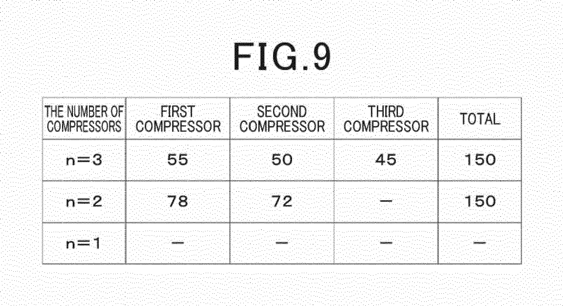

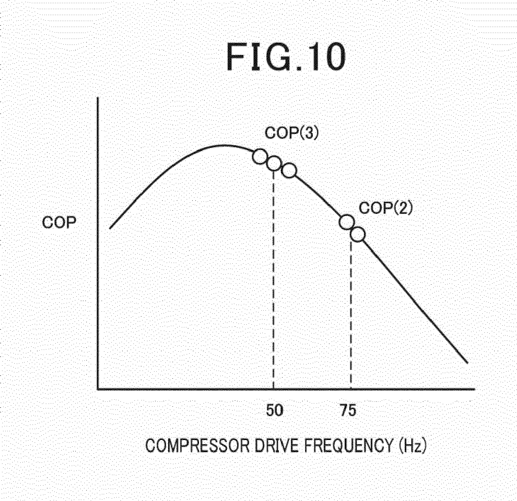

FIG. 9 is a diagram illustrating exemplary drive frequency allocation when the drive frequency necessary for operation of the compressors 11 is 150 Hz. FIG. 10 is a graph illustrating a COP calculation result when the drive frequency necessary for operation of the compressors 11 is 150 Hz.

As illustrated in FIGS. 9 and 10, for example, when the drive frequency necessary for operation of the compressors 11 is set to be 150 Hz based on the cooling-heating load, the control unit 60 selects the characteristic line of the compressor 11 stored in the data table based on the high-pressure-side refrigerant temperature and the low-pressure-side refrigerant temperature of each compressor 11.

When the necessary drive frequency of 150 Hz is allocated to the three compressors 11, for example, the drive frequency of the first compressor 11a is set to be 55 Hz, the drive frequency of the second compressor 11b is set to be 50 Hz, and the drive frequency of the third compressor 11c is set to be 45 Hz.

Subsequently, the control unit 60 calculates the COP with the three compressors 11 based on the set drive frequencies.

Similarly, when the control unit 60 reduces the number of compressors 11 and allocates the necessary drive frequency of 150 Hz to two of the compressors 11, for example, the drive frequency of the first compressor 11a is set to be 78 Hz and the drive frequency of the second compressor 11b is set to be 72 Hz.

Then, the control unit 60 calculates the COP with the two compressors 11.

Since each compressor 11 of the present embodiment is a compressor 11 having a maximum operation frequency of 120 Hz approximately, the necessary drive frequency of 150 Hz cannot be allocated to one compressor 11.

In this case, as illustrated in FIG. 10, it can be understood that the COP is maximum when the three compressors 11 are driven.

Thus, the control unit 60 selects drive control involving the three compressors 11.

Subsequently, operation of the present embodiment will be described below with reference to a flowchart.

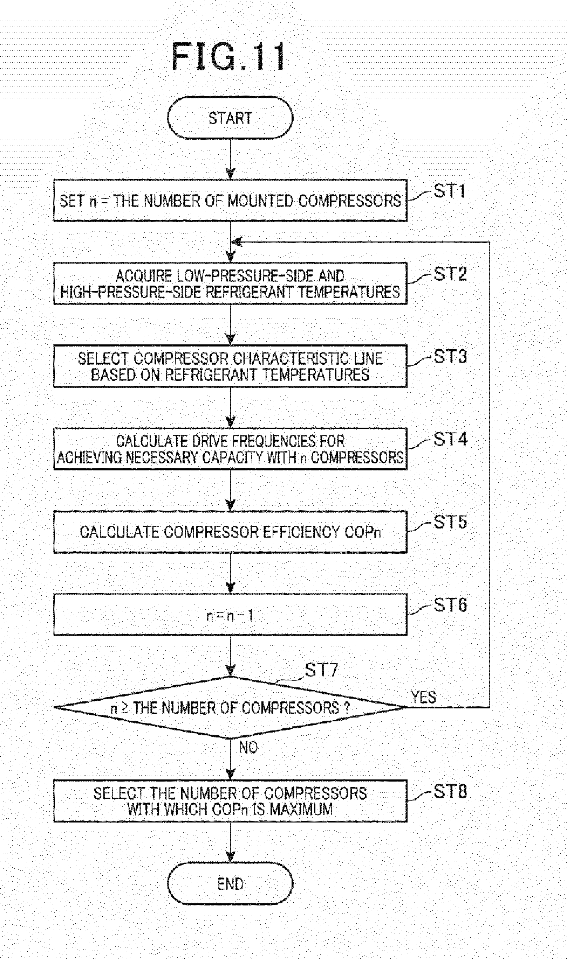

FIG. 11 is a flowchart illustrating the operation of the present embodiment.

First, the control unit 60 recognizes the number of mounted compressors 11 (ST1) and acquires the low-pressure-side refrigerant temperature and the high-pressure-side refrigerant temperature of each compressor 11 through the low-pressure-side refrigerant temperature sensor 50 and the high-pressure-side refrigerant temperature sensor 51 (ST2).

Subsequently, the control unit 60 selects the characteristic line of the compressor 11 stored in the data table based on the high-pressure-side refrigerant temperature and the low-pressure-side refrigerant temperature (ST3).

Then, the control unit 60 calculates the drive frequencies of the compressors 11 for achieving a necessary capacity with n compressors 11 (ST4), and the control unit 60 calculates the COP based on the calculated drive frequencies of the compressors 11 (ST5).

After the COP calculation ends, the control unit 60 sets n = n-1 by reducing the number of compressors 11 by one (ST6) and determines whether the number n of compressors 11 is equal to a predetermined number (ST7).

Then, when the number n of compressors 11 is larger than the predetermined number (YES at ST7), calculation for a case in which the necessary capacity is achieved with n-1 compressors 11 is performed in a similar manner.

Then, when the number n of compressors 11 has become smaller than the predetermined number (NO at ST7), the control unit 60 selects the number of compressors 11 with which the calculated COP is maximum (ST8).

The control unit 60 controls to perform operation at the selected number of compressors 11.

When each compressor 11 is driven at a predetermined drive frequency to perform cooling operation, the refrigerant compressed by the compressor 11 is transferred to the outdoor heat exchanger 16 through the oil separator 14 and the four-way valve 15, subjected to heat exchange with external air at the outdoor heat exchanger 16, and then transferred to the water-refrigerant heat exchanger 40.

Then, the refrigerant transferred to the water-refrigerant heat exchanger 40 is subjected to heat exchange with the water flowing through the water pipe 41 and then returned to the compressor 11 again.

The water cooled through heat exchange with the refrigerant at the water-refrigerant heat exchanger 40 is transferred to the predetermined indoor unit by drive of the pump 42, thereby performing indoor cooling.

When heating operation is performed, the refrigerant compressed by each compressor 11 is transferred to the water-refrigerant heat exchanger 40 through the oil separator 14 and the four-way valve 15, subjected to heat exchange with the water flowing through the water pipe 41, and then returned to the compressor 11 through the outdoor heat exchanger 16.

The water heated through heat exchange with the refrigerant at the water-refrigerant heat exchanger 40 is transferred to the predetermined indoor unit by drive of the pump 42, thereby performing indoor heating.

In this case, oil separated from the oil separator 14 when cooling or heating operation is performed flows into the first refrigerant pipe 21 through the oil pipe 30. The oil having flowed into the first refrigerant pipe 21 is transferred to the first compressor 11a.

Specifically, since the activation priority of the first compressor 11a is set to be highest in the present embodiment, an operation load on the first compressor 11a is high and the amount of oil outflow is large. Thus, it is possible to solve oil insufficiency at the first compressor 11a by preferentially returning oil to the first compressor 11a.

Surplus oil from the first compressor 11a overflows and is transferred to the second compressor 11b through a first oil returning pipe 32.

Similarly, surplus oil from the second compressor 11b is transferred to the third compressor 11c through a second oil returning pipe 34.

When the first compressor 11a has stopped for some reason, oil transferred through the oil returning pipes falls to the three-way joint 13 through the first bifurcation pipe 25.

Thus, when the second compressor 11b is driven, the second compressor 11b sucks the oil accumulated in the three-way joint 13 simultaneously with suction of the refrigerant from the second bifurcation pipe 26, which achieves oil supply at the second compressor 11b.

As described above, the present embodiment includes the control unit 60 configured to perform drive control of a plurality of compressors 11, and the control unit 60 calculates drive frequencies of n compressors 11 among the plurality of compressors 11 in accordance with the cooling-heating load, calculates the COP for the calculated drive frequencies, determines the number of compressors 11 with which the COP is maximum, and performs drive control involving the determined number of compressors 11.

Accordingly, it is possible to control the number of compressors 11 with which the COP is maximum in accordance with a cooling-heating load as a chiller, thereby performing air conditioning at an increased COP.

In the present embodiment, the control unit 60 acquires the high-pressure-side refrigerant temperature and the low-pressure-side refrigerant temperature of each compressor 11, selects the characteristic line of the compressor 11 based on the high-pressure-side refrigerant temperature and the low-pressure-side refrigerant temperature, and calculates the COP at the drive frequencies of the compressors 11 based on the characteristic line.

Accordingly, it is possible to calculate the COP in accordance with characteristics of each compressor 11 based on the characteristic line.

In the present embodiment, the outdoor unit 10 includes bifurcation pipes bifurcating to the plurality of compressors 11 from the refrigerant pipe 20 through which the refrigerant is returned to the compressors 11, and includes the oil separator 14, and the oil pipe 30 through which oil is returned from the oil separator 14 is connected with the bifurcation pipe of the compressor 11 having a highest activation priority.

Accordingly, it is possible to efficiently supply oil to a compressor 11 having a high activation priority.

The present invention is not limited to the description of the embodiment but may be modified and applied in various manners without departing from the scope of the present invention.

As described above, an air conditioning device according to the present invention can be excellently used as an air conditioning device capable of performing control involving the number of compressors with which the COP is maximum in accordance with a cooling-heating load as a chiller and efficiently performing air conditioning at an increased COP.
- 10: outdoor unit
- 11: compressor
- 11a: first compressor
- 11b: second compressor
- 11c: third compressor
- 13: three-way joint
- 14: oil separator
- 16: outdoor heat exchanger
- 20: refrigerant pipe
- 21: first refrigerant pipe
- 22: second refrigerant pipe
- 23: third refrigerant pipe
- 25: first bifurcation pipe
- 26: second bifurcation pipe
- 27: third bifurcation pipe
- 28: fourth bifurcation pipe
- 30: oil pipe
- 32: first oil returning pipe
- 34: second oil returning pipe
- 40: water-refrigerant heat exchanger
- 41: water pipe
- 42: pump
- 50: low-pressure-side refrigerant temperature sensor
- 51: high-pressure-side refrigerant temperature sensor
- 60: control unit
- 61: storage unit

## Claims

1. An air conditioning device comprising:
an outdoor unit (10) including a plurality of compressors (11); and
a refrigerant-water heat exchanger (40) configured to perform heat exchange between a refrigerant transferred from the outdoor unit and water; **characterized by** comprising
a control unit (60) configured to perform drive control of the plurality of compressors,
wherein the control unit calculates drive frequencies of n compressors among the plurality of compressors in accordance with a cooling-heating load, calculates a COP for the calculated drive frequencies, determines the number of compressors with which the COP is maximum, and performs drive control involving the determined number of compressors.

2. The air conditioning device according to claim 1, wherein the control unit acquires a high-pressure-side refrigerant temperature and a low-pressure-side refrigerant temperature of each compressor, selects a characteristic line of the compressor based on the high-pressure-side refrigerant temperature and the low-pressure-side refrigerant temperature, and calculates the COP at the drive frequencies of the compressors based on the characteristic line.

3. The air conditioning device according to claim 1 or 2, wherein
the outdoor unit includes bifurcation pipes bifurcating to the plurality of compressors from a refrigerant pipe (20) through which the refrigerant is returned to the compressors, and includes an oil separator (14), and
an oil pipe (30) through which oil is returned from the oil separator is connected with the bifurcation pipe of the compressor having a highest activation priority.
